# EUROPEAN PATENT SPECIFICATION

(11) **EP 1 550 314 B1**
(45) Date of publication and mention of the grant of the patent: **25.10.2006**
(21) Application number: 03792570.8
(22) Date of filing: 07.08.2003
(51) Int. Cl.: H04N 7/26

(54) **DIGITAL VIDEO SIGNAL ENCODING**
DIGITALE VIDEOSIGNALCODIERUNG
CODAGE DE SIGNAUX VIDEO NUMERIQUE

(30) Priority: 21.08.2002 EP 02292070
(43) Date of publication of application: 06.07.2005
(73) Proprietor: Koninklijke Philips Electronics N.V., 5621 BA Eindhoven (NL)
(72) Inventor: AUBERGER, Stephane, F-75008 Paris (FR); PICARD, Yann, F-75008 Paris (FR)
(74) Representative: Landousy, Christian
(86) International application number: PCT/IB2003/003504
(87) International publication number: WO 2004/019618

(56) References cited:
- GB-A- 2 325 582

## Description

### FIELD OF THE INVENTION

The present invention relates to a method for encoding a digital video signal, said digital video signal comprising some sets of objects with associated shapes. The invention also relates to an encoder, said encoder implementing said method.

Such a method may be used in, for example, a video communication system for 3D video applications within MPEG standards.

### BACKGROUND OF THE INVENTION

A video communication system typically comprises a transmitter with an encoder and a receiver with a decoder. Such a system receives an input digital video signal, encodes said signal via the encoder, transmits the encoded signal to the receiver, then decodes the transmitted signal via the decoder resulting in an output digital video signal, which is the reconstructed signal of the input digital video signal. The receiver then displays said output digital video signal. A 3D digital video signal comprises some images with some sets of objects, which are characterized in particular by some associated shapes and textures.

Current object encoding schemes rely on the description of a specific shape. To allow objects with several connected components and complicated shapes (intersections, multiple edges), a block-based paradigm has been chosen by the MPEG-4 standard, (document referred to under the MPEG-4 document number w3056 at ISO and entitled "Information Technology - Coding of audio-visual objects - Part 2: Visual, ISO/IEC JTC 1/SC 29 /WG 11, Maui, December 1999"). An object is split into several blocks. To make easier the identification of said blocks, a system of rectangular bounding boxes is used, and the smallest rectangular bounding box is computed. GB-A-2 325 582 discloses a method for encoding the contour of an object in a video signal using such a bounding rectangle. Each block within this bounding box is defined either as "in the shape", "out of the shape" or as a "boundary block". For the latter, the distinction between "in" and "out" is made at pixel level. One inconvenience of these encoding schemes is that the use of the bounding box is good as far as objects are strictly within the image frame, i.e. don't touch the image frame; but as soon as the objects are positioned against the image frame or as soon as their shape has vertical or horizontal lines at its boundaries, there are some cases when coding bit cost can be significantly lowered.

### SUMMARY OF THE INVENTION

Accordingly, it is an object of the invention to provide a method and an encoder for encoding a digital video signal, said digital video signal comprising some sets of objects with associated shapes, which lower the number of bits needed to encode objects which are positioned against an image frame and objects the shape of which contains vertical or horizontal lines at its boundaries.

To this end, there is provided a method comprising the steps of:
- Defining an information for determining if the shape of an object is to be encoded or its complement's one, and
- As a function of this information, encoding said shape or its complement.

In addition, there is provided an encoder comprising information for determining if the shape of an object is to be encoded, or its complement's one, and encoding means for encoding said shape or its complement as a function of said information.

As we will see in detail further on, by encoding the complement of the shape in some cases instead of the original shape, the compression efficiency will be improved, as fewer bits will be necessary to encode the shape.

### BRIEF DESCRIPTION OF THE DRAWINGS

Additional objects, features and advantages of the invention will become apparent upon reading the following detailed description and upon reference to the accompanying drawings in which:

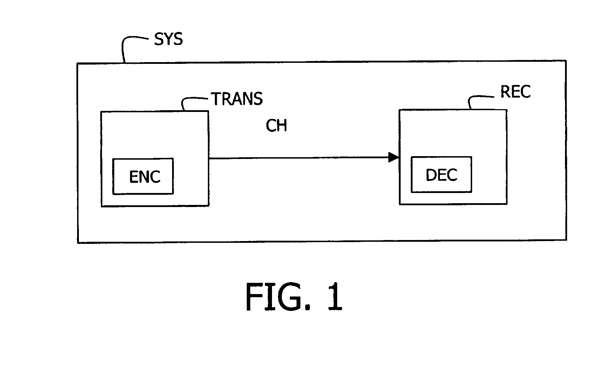

- Fig. 1 illustrates a video communication system comprising an encoder and a decoder according to the invention,
- Fig. 2 is schematic diagram of the method of encoding according to the invention,
- Fig. 3 represents an object and its associated shape to be encoded by the method of encoding of Fig. 2,
- Fig. 4 represents the object of Fig. 3, which has been encoded according to a classical method of encoding, and
- Fig. 5 represents the object of Fig. 3, which has been encoded according to a first embodiment of the method of encoding of Fig. 2.
- Fig. 6 represents the object of Fig.3, which has been encoded according to a second embodiment of the method of encoding of Fig. 2.

### DETAILED DESCRIPTION OF THE INVENTION

In the following description, well-known functions or constructions by the person skilled in the art are not described in detail since they would obscure the invention in unnecessary detail.

The present invention relates to a method for encoding a digital video signal.

Such a method may be used within a video communication system SYS for video applications in MPEG2 or MPEG4, wherein said video communication system comprises a transmitter TRANS, a transmission medium CH and a receiver RECEIV. Said transmitter TRANS and said receiver RECEIV comprise an encoder ENC and a decoder DEC respectively.

In order to transmit efficiently some video signals through the transmission medium CH, said encoder ENC applies an encoding to a video signal, then the encoded video signal is sent to a decoder DEC, which decodes said signal. Finally the receiver RECEIV displays said video signal.

A video signal comprises some sets of objects usually inside some images I, wherein an image I is represented by a plurality of pixels and said objects have associated shapes.

The encoder ENC comprises an information FLAG for determining if the shape of an object is to be encoded, or its complement's one, and encoding means for encoding said shape or its complement as a function of said information FLAG.

The decoder DEC comprises decoding means for retrieving said information FLAG, for decoding said shape or its complement as a function of said information FLAG, and for retrieving the shape as a function of said complement if the complement has been decoded.

The encoding of a video signal is based on a block principle. The smallest rectangle that frames an object OBJ is computed. Such rectangle is called a bounding box BOUND_BOX. Said bounding box BOUND_BOX is split into blocks B that are encoded. Each block has a type, wherein said type can be "in the shape", "out of the shape", and "boundary block". The bounding box BOUND_BOX of an object OBJ is also called original bounding box.

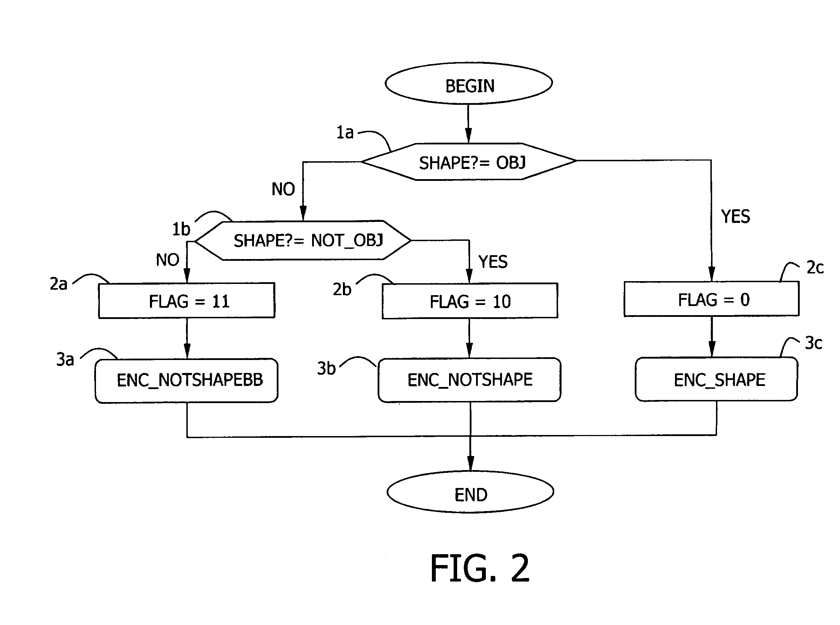

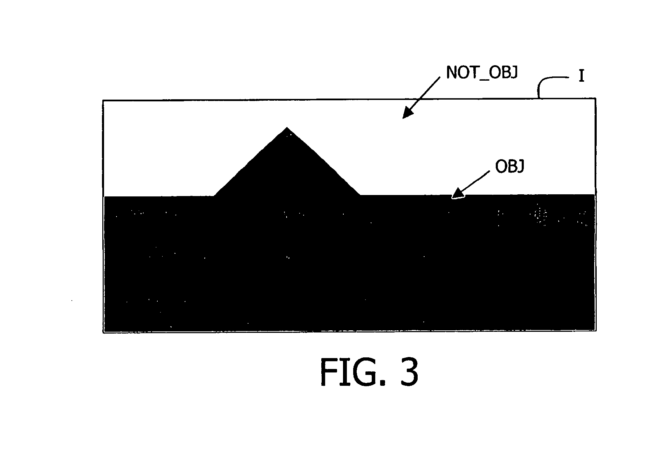

The encoding of a digital video signal is done as follows and is illustrated by Figs. 2 and 3.

**In a first step 1),** the encoder ENC performs a first process to choose which shape of an object OBJ it will encode, the original shape or its complement (step 1a). In the case that we choose to encode the complement, in a first embodiment, one can choose to use the complement NOT_OBJ of the object OBJ in the image frame or, in a second embodiment, one can choose the complement NOT_OBJ_BB of the object OBJ within its bounding box BOUND_BOX (step 1b).

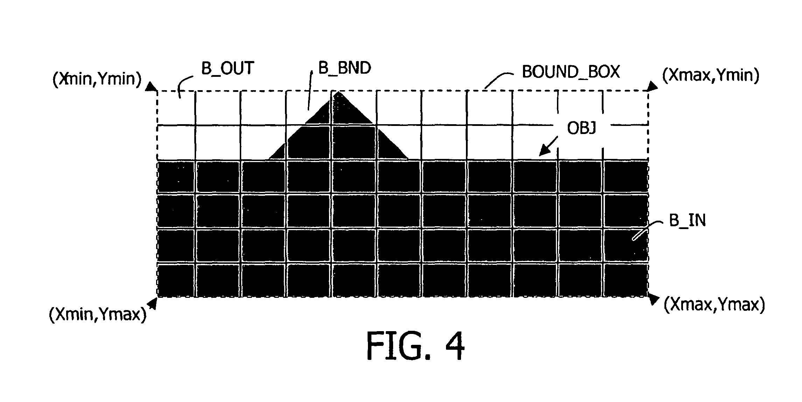

In a non-limitative embodiment, said first process is done by:
- Calculating three bounding boxes BOUND_BOX, one for the original object OBJ, one for its complement NOT_OBJ, and another one for its complement NOT_OBJ_BB within the bounding box of the object OBJ as shown in Fig. 4, Fig. 5 and Fig. 6 respectively,
- Choosing, for the encoding, the shape corresponding to the object OBJ, its complement NOT_OBJ or its complement NOT_OBJ_BB within the original bounding, which has the smallest bounding box BOUND_BOX. Note that, preferentially, NOT_OBJ_BB is chosen only if its bounding box BOUND_BOX is considered sufficiently smaller than the bounding box BOUND_BOX of the object OBJ and the bounding box BOUND_BOX of its complement NOT_OBJ, as it will be described hereinafter.

Note that a bounding box BOUND_BOX has 4 coordinates, which correspond to the smallest coordinates Xmin, Ymin and the greatest coordinates Xmax, Ymax in pixels taken by the associated object OBJ within an image frame 1. Note that these coordinates can also be expressed by a position (X, Y), a length and a width for example.

In the example illustrated in Fig. 3, an object OBJ is represented within an image I. The shape of said object OBJ is the gray area.

The complement of said object NOT_OBJ is the white area.

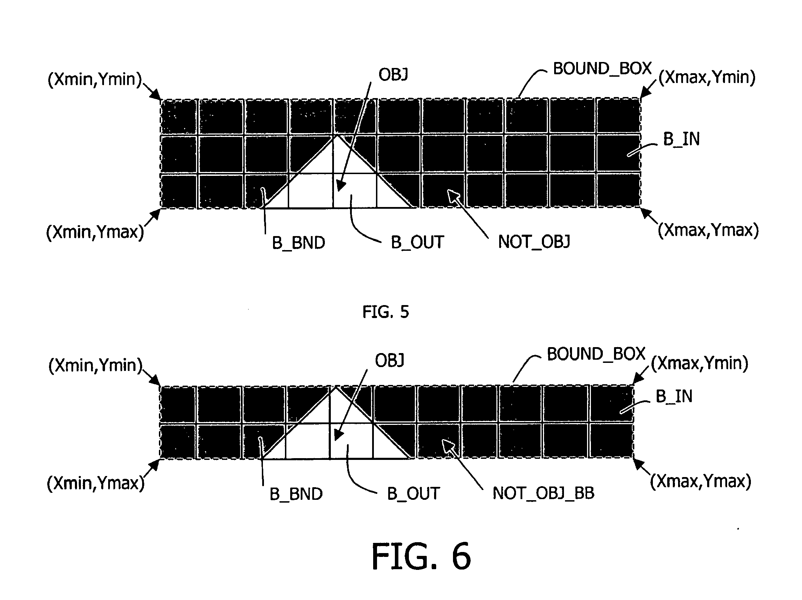

The bounding box BOUND_BOX of the object OBJ is represented in Fig. 4, whereas the bounding box BOUND_BOX of its complement NOT_OBJ is represented in Fig. 5. The complement NOT_OBJ_BB of said object OBJ within its bounding box is the white area in Fig. 4. Its bounding box BOUND_BOX is represented in Fig. 6. One can remark that these bounding boxes BOUND_BOX are the rectangles in broken lines that frame the object OBJ, the complement NOT_OBJ and its complement NOT_OBJ_BB within the original bounding box BOUND_BOX respectively.

In a first non-limitative embodiment, when the bounding box BOUND_BOX of an object OBJ is greater than the bounding box BOUND_BOX of its complement NOT_OBJ, its complement's shape is encoded. In a second non-limitative embodiment, if the bounding box BOUND_BOX of the complement NOT_OBJ_BB of an object OBJ within its bounding box BOUND_BOX is even smaller and if the difference in size of the bounding boxes (of the complement's NOT_OBJ_BB one within the original bounding box and the object's OBJ one, or the complement's NOT_OBJ one) is considered large enough (for example such that the encoding of the coordinates of the original bounding box will take fewer bits than the encoding of more blocks within a larger bounding box BOUND_BOX using the object OBJ or its complement NOT_OBJ), the shape of this complement NOT_OBJ_BB within the original bounding box BOUND_BOX is encoded.

As can be seen in these Figs. 6, 5, and 4, the bounding box BOUND_BOX of the complement object NOT_OBJ_BB within the original bounding box is the smallest one, followed by the bounding box BOUND_BOX of the complement object NOT_OBJ and the original bounding box of the object OBJ, respectively.

Indeed, one can see that in the bounding box BOUND_BOX of the original object OBJ, there are 5 blocks called boundary blocks B_BND and 61 plain blocks of which 16 blocks out of the shape B_OUT and 45 block in the shape B_IN.

As for the bounding box BOUND_BOX of the complement object NOT_OBJ, there are as many boundary blocks B_BND as there are for the original object OBJ, but far fewer plain blocks 28, of which only 1 out of shape block B_OUT and 27 in the shape blocks B_IN.

As for the bounding box BOUND_BOX of the complement object NOT_OBJ_BB within the original bounding box, there are as many boundary blocks B_BND as there are for the original object OBJ and the complement object NOT_OBJ, but even fewer plain blocks than in the case of the bounding box BOUND_BOX of the complement object NOT_OBJ, i. e. 17, of which only 1 out of shape and 16 in the shape

Still, the bounding box BOUND_BOX of the complement object NOT_OBJ_BB within the original bounding box is only 11 blocks smaller than the bounding box BOUND_BOX of the complement object NOT_OBJ.

The encoding of these 11 blocks is likely to cost fewer bits than the encoding of the coordinates of the original bounding box BOUND_BOX if one wants to use the complement NOT_OBJ_BB of the object OBJ within the original bounding box.

Hence, in this example, it will be far more efficient and less expensive in terms of bit cost to encode the shape of the complement object NOT_OBJ than to encode the original object's shape OBJ or its complement NOT_OBJ_BB within the original object's bounding box, as there will be fewer bits used to encode said complement object NOT_OBJ shape than to encode said complement object NOT_OBJ_BB shape within the original boundary box plus the coordinates of the original boundary box if one uses the complement object NOT_OBJ_BB within the original bounding box.

**In a second step 2),** the encoding process begins. The encoder ENC encodes all the characteristics of an object (whatever original or complement is chosen), in particular its associated texture, motion vectors, shape, well known by the person skilled in the art.

During the encoding process, when it comes to the shape encoding, the information FLAG, determining if the shape of an object has been encoded or that of one of its complements, is defined at video object level (VO in MPEG-4). This information is, for example, a variable length (one and two bit words) flag FLAG. If said flag is equal to 0, the standard coding is used, i.e. the shape of the original object OBJ is encoded (step 2c in Fig. 2), whereas if said flag is equal to 10, the shape of the complement NOT_OBJ is encoded (step 2b) and if the said flag is equal to 11 the shape of the complement NOT_OBJ_BB of said object OBJ within its bounding box BOUND_BOX is encoded along with the coordinates of the bounding box of said object OBJ (step 2a).

In our example, the information FLAG is set to 10 as illustrated in the step 2a) of Fig. 2.

**In a third step 3),** the encoder ENC encodes the shape of the chosen object, either the original one OBJ (step 3c), its complement NOT_OBJ (step 3b) or the shape of its complement NOT_OBJ_BB within the original bounding box BOUND_BOX with the coordinates of the bounding box BOUND_BOX of said object OBJ (step 3a). In our example, it encodes the shape of the complement object NOT_OBJ as illustrated in the step 3b) of Fig. 2.

Finally, the transmitter TRANS transmits in particular the encoded shape to the receiver RECEIV, and thus to the decoder DEC.

During the decoding process, at the decoder DEC side, the knowledge of the value of the information FLAG will tell said decoder DEC what to do.

If set to zero, this flag FLAG indicates that the original shape was encoded, and as a consequence the decoded shape is the standard one. If set to one zero, this flag FLAG indicates that the complement of the original shape in the image frame was encoded, and that one should compute the complement of the decoded shape in order to retrieve the original shape. If set to one one, this flag FLAG indicates that the complement NOT_OBJ_BB of the original shape within its bounding box was encoded along with the coordinates of said original bounding box and that one should compute the complement of the decoded shape within the bounding box defined by the decoded coordinates.

Note that the method for encoding according to the invention is preferentially applied to an original object OBJ that is positioned against an image frame or the shape of which contains horizontal or vertical lines at its boundaries i.e. when all or part of said lines meet the boundary box. Thus, it is especially the case when dealing with large objects. In case an original object OBJ with no specific boundaries is strictly inside an image frame, i.e. doesn't touch the edges of the frame, the classical encoding as described in the MPEG-4 standard is sufficient.

Therefore, preferentially, the information FLAG is activated, i.e. used, when an object OBJ has a bounding box BOUIVD_BOX with boundaries in common with the image I comprising said object OBJ or the shape of which contains horizontal or vertical lines at its boundaries.

Thus, one advantage of the present invention is the ability to tell the decoder, and therefore the receiver, how to decode the shape of an object.

Moreover, the use of a flag allows to simply define the type of shape of an object, original or complement, and to encode the shape of the objects within an image in an improved efficient way.

It is to be understood that the present invention is not limited to the aforementioned embodiments and variations and modifications may be made without departing from the spirit and scope of the invention as defined in the appended claims. In this respect, the following closing remarks are made.

It is to be understood that the present invention is not limited to the aforementioned video application. It can be used within any application using a system for processing a signal taking into account shapes of objects. In particular, the invention applies to video compression algorithms of the other MPEG standards family (MPEG-1, MPEG-2) and to the ITU H26X family (H261, H263 and extensions, H261 being the latest today, reference number Q15-K-59).

It is to be understood that the method according to the present invention is not limited to the aforementioned implementation.

There are numerous ways of implementing functions of the method according to the invention by means of items of hardware or software, or both, provided that a single item of hardware or software can carry out several functions. It does not exclude that an assembly of items of hardware or software or both carry out a function, thus forming a single function without modifying the method for processing the video signal in accordance with the invention.

Said hardware or software items can be implemented in several manners, such as by means of wired electronic circuits or by means of a suitably programmed integrated circuit, respectively. The integrated circuit can be contained in a computer or in an encoder. In the second case, the encoder comprises an item of information for determining if the shape of an object is to be encoded, or its complement's one, and encoding means for encoding said shape or its complement as a function of said information, as described previously, said information or means being hardware or software items as stated above.

The integrated circuit comprises a set of instructions. Thus, said set of instructions contained, for example, in a computer programming memory or in an encoder memory may cause the computer or the encoder to carry out the different steps of the encoding method.

The set of instructions may be loaded into the programming memory by reading a data carrier such as, for example, a disk. A service provider can also make the set of instructions available via a communication network such as, for example, the Internet.

Any reference sign in the following claims should not be construed as limiting the claim. It will be obvious that the use of the verb "to comprise" and its conjugations does not exclude the presence of any other steps or elements besides those defined in any claim. The article "a" or "an" preceding an element or step does not exclude the presence of a plurality of such elements or steps.

## Claims

1. A method for encoding a digital video signal, said digital video signal comprising some sets of objects (OBJ) with associated shapes, **characterized in that** it comprises the steps of:
- Defining information (FLAG) for determining if the shape of an object (OBJ) is to be encoded, or its complement's one, and
- As a function of this information (FLAG), encoding said shape or its complement.

2. A method of processing a digital video signal as claimed in claim 1, **characterized in that** the complement is the complement (NOT_OBJ) of an object (OBJ) in an image frame.

3. A method of processing a digital video signal as claimed in claim 1, **characterized in that** a bounding box (BOUND_BOX) is associated with an object (OBJ) and the complement is the complement (NOT_OBJ_BB) of an object (OBJ) within its bounding box (BOUND_BOX).

4. A method of processing a digital video signal as claimed in claim 3, **characterized in that** it has a further step of encoding the bounding box coordinates of said object (OBJ).

5. A method of processing a digital video signal as claimed in any one of the claims 1 to 4, **characterized in that** the information is activated when an object (OBJ) has a bounding box (BOUND_BOX) with frontiers in common with an image comprising said object (OBJ).

6. A method of processing a digital video signal as claimed in any one of the claims 1 to 5, **characterized in that** when the bounding box (BOUND_BOX) of an object (OBJ) is greater than the bounding box (BOUND_BOX) of its complement (NOT_OBJ, NOT_OBJ_BB), its complement's shape is encoded.

7. A computer program product for an encoder (ENC), comprising a set of instructions, which, when loaded into said encoder (ENC), causes the encoder (ENC) to carry out the method claimed in claims 1 to 6.

8. A computer program product for a computer, comprising a set of instructions, which, when loaded into said computer, causes the computer to carry out the method claimed in claims 1 to 6.

9. A method for decoding a digital video signal, said digital video signal comprising some sets of objects (OBJ) with associated shapes, **characterized in that** it comprises the steps of:
- Retrieving information (FLAG), which determines if the shape of an object (OBJ) has been encoded or its complement's one,
- As a function of said information (FLAG), decoding said shape or its complement (NOT_OBJ, NOT_OBJ_BB), and
- If the complement has been decoded, retrieving the shape as a function of said complement (NOT_OBJ, NOT_OBJ_BB).

10. An encoder (ENC) for encoding a digital video signal, said digital video signal comprising some sets of objects (OBJ) with associated shapes, **characterized in that** it comprises an information (FLAG) for determining if the shape of an object (OBJ) is to be encoded, or its complement's one, and encoding means for encoding said shape or its complement as a function of said information (FLAG).

11. A decoder (DEC) for decoding a digital video signal, said digital video signal comprising some sets of objects (OBJ) with associated shapes, **characterized in that** it comprises decoding means for retrieving an information (FLAG), which determines if the shape of an object (OBJ) has been encoded or its complement's one, for decoding said shape or its complement as a function of said information (FLAG), and for retrieving the shape as a function of said complement if the complement (NOT_OBJ, NOT_OBJ_BB) has been decoded.

12. A video communication system (SYS), which is able to receive a digital video signal, comprising a transmitter (REC) with an encoder (ENC) as claimed in claim 10 for encoding said video signal, a transmission channel (CH) for transmitting the encoded video signal and a receiver (RECEIV) with a decoder (DEC) as claimed in claim 11 for decoding said encoded video signal.

## Patentansprüche

1. Verfahren zum Codieren eines digitalen Videosignals, wobei das digitale Videosignal einige Sätze von Objekten (OBJ) mit assoziierten Formen aufweist, **dadurch gekennzeichnet, dass** das Verfahren die nachfolgenden Schritte umfasst:
- das Definieren von Information (FLAG) um zu ermitteln, ob die Form eines Objektes (OBJ) oder die Form einer Ergänzung desselben codiert werden soll, und
- als eine Funktion dieser Information (FLAG) das Codieren der genannten Form oder der Ergänzung derselben.

2. Verfahren zum Verarbeiten eines digitalen Videosignals nach Anspruch 1, **dadurch gekennzeichnet, dass** die Ergänzung die Ergänzung (NOT_OBJ) eines Objekts (OBJ) in einem Bildrahmen ist.

3. Verfahren zum Verarbeiten eines digitalen Videosignals nach Anspruch 1, **dadurch gekennzeichnet, dass** eine Begrenzungsbox (BOUND_BOX) mit einem Objekt (OBJ) assoziiert ist und die Ergänzung die Ergänzung (NOT_OBJ_BB) eines Objekts (OBJ) innerhalb der Begrenzungsbox (BOUND_BOX) ist.

4. Verfahren zum Verarbeiten eines digitalen Videosignals nach Anspruch 3, **dadurch gekennzeichnet, dass** es einen weiteren Schritt zum Codieren der Begrenzungsboxkoordinaten des genannten Objekts (OBJ) hat.

5. Verfahren zum verarbeiten eines digitalen Videosignals nach einem der Ansprüche 1 bis 4, **dadurch gekennzeichnet, dass** die Information aktiviert wird, wenn ein Objekt (OBJ) eine Begrenzungsbox (BOUND_BOX) mit Ausreißern gemeinsam mit einem Bild hat, das das genannte Objekt (OBJ) aufweist.

6. Verfahren zum Verarbeiten eines digitalen Videosignals nach einem der Ansprüche 1 bis 5, **dadurch gekennzeichnet, dass** wenn die Begrenzungsbox (BOUND_BOX) eines Objekts (OBJ) größer ist als die Begrenzungsbox (BOUND_BOX) der Ergänzung (NOT_OBJ, NOT_OBJ_BB), die Form der Ergänzung codiert wird.

7. Computerprogrammprodukt für einen Codierer (ENC), der einen Satz mit Instruktionen aufweist, der, wenn in den genannten Codierer (ENC) geladen dafür sorgt, dass der Codierer (ENC) das Verfahren nach den Ansprüchen 1 bis 6 durchführt.

8. Computerprogrammprodukt für einen Computer, mit einem Satz mit Instruktionen, der, wenn in den genannten Computer geladen, dafür sorgt, dass der Computer das Verfahren nach den Ansprüchen 1 bis 6 durchführt.

9. Verfahren zum Decodieren eines digitalen Videosignals, wobei das genannte digitale Videosignal einige Sätze von Objekten (OBJ) mit assoziierten Formen aufweist, **dadurch gekennzeichnet, dass** es die nachfolgenden Verfahrensschritte umfasst:
- das Suchen von Information (FLAG), die ermittelt, ob die Form eines Objekts (OBJ) oder die Ergänzung derselben codiert werden soll,
- Als eine Funktion der genannten Information (FLAG), das Decodieren der genannten Form oder der Ergänzung (NOT_OBJ, NOT_OBJ_BB), und
- Wenn die Ergänzung decodiert worden ist, das Suchen der Form als eine Funktion der genannten Ergänzung (NOT_OBJ, NOT_OBJ_BB).

10. Codierer (ENC) zum Codieren eines digitalen Videosignals, wobei das genannte digitale Videosignal einige Sätze von Objekten (OBJ) mit assoziierten Formen aufweist, **dadurch gekennzeichnet, dass** er eine Information (FLAG) aufweist um zu ermitteln, ob die Form eines Objekts (OBJ) oder die Ergänzung derselben codiert werden soll, und Codierungsmittel zum Codieren der genannten Form oder der Ergänzung als eine Funktion der genannten Information (FLAG).

11. Decoder (DEC) zum Decodieren eines digitalen Videosignals, wobei das genannte digitale Videosignal einige Sätze von Objekten (OBJ) mit assoziierten Formen aufweist, **dadurch gekennzeichnet, dass** er Decodierungsmittel aufweist zum Suchen von Information (FLAG), die ermittelt, ob die Form eines Objekts (OBJ) codiert worden ist oder die Ergänzung, zum Decodieren der genannten Form oder der Ergänzung als eine Funktion der genannten Information (FLAG), und zum Suchen der Form als eine Funktion der genannten Ergänzung, wenn die Ergänzung (NOT_OBJ, NOT_OBJ_BB) decodiert worden ist.

12. Videokommunikationssystem (SYS), das imstande ist, ein digitales Videosignal zu empfangen, mit einem Sender (REC) mit einem Codierer (ENC) nach Anspruch 10 zum Codieren des genannten Videosignals, einem Übertragungskanal (CH) zum Übertragen des codierten Videosignals und mit einem Empfänger (RECEIV) mit einem Decoder (DEC) nach Anspruch 11 zum Decodieren des genannten codierten Videosignals.

## Revendications

1. Procédé permettant de coder un signal vidéo numérique, ledit signal vidéo numérique comprenant certains jeux d'objets (OBJ) avec des formes associées, **caractérisé en ce qu'**il comprend les étapes suivantes :
- la définition d'une information (FLAG) pour déterminer si la forme d'un objet (OBJ) doit être codée, ou celle de son complément, et
- en fonction de cette information (FLAG), le codage de ladite forme ou de son complément.

2. Procédé de traitement d'un signal vidéo numérique suivant la revendication 1, **caractérisé en ce que** le complément est le complément (NOT_OBJ) d'un objet (OBJ) dans une image.

3. Procédé de traitement d'un signal vidéo numérique suivant la revendication 1, **caractérisé en ce qu'**un rectangle englobant (BOUND_BOX) est associé à un objet (OBJ) et le complément est le complément (NOT_OBJ_BB) d'un objet (OBJ) à l'intérieur de son rectangle englobant (BOUND_BOX).

4. Procédé de traitement d'un signal vidéo numérique suivant la revendication 3, **caractérisé en ce qu'**il comprend une étape supplémentaire de codage des coordonnées du rectangle englobant dudit objet (OBJ).

5. Procédé de traitement d'un signal vidéo numérique suivant l'une quelconque des revendications 1 à 4, **caractérisé en ce que** l'information est activée lorsqu'un objet (OBJ) comporte un rectangle englobant (BOUND_BOX) ayant des frontières en commun avec une image comprenant ledit objet (OBJ).

6. Procédé de traitement d'un signal vidéo numérique suivant l'une quelconque des revendications 1 à 5, **caractérisé en ce que** lorsque le rectangle englobant (BOUND_BOX) d'un objet (OBJ) est plus grand que le rectangle englobant (BOUND_BOX) de son complément (NOT_OBJ, NOT_OBJ_BB), la forme de son complément est codée.

7. Produit formant programme informatique destiné à un codeur (ENC), comprenant un jeu d'instructions, qui, lorsqu'il est chargé dans ledit codeur (ENC), fait que le codeur (ENC) exécute le procédé suivant les revendications 1 à 6.

8. Produit formant programme informatique destiné à un ordinateur, comprenant un jeu d'instructions, qui, lorsqu'il est chargé dans ledit ordinateur, fait que l'ordinateur exécute le procédé suivant les revendications 1 à 6.

9. Procédé permettant de décoder un signal vidéo numérique, ledit signal vidéo numérique comprenant certains jeux d'objets (OBJ) avec des formes associées, **caractérisé en ce qu'**il comprend les étapes suivantes :
- la récupération d'une information (FLAG), qui détermine si la forme d'un objet (OBJ) a été codée, ou celle de son complément;
- en fonction de ladite information (FLAG), le décodage de ladite forme ou de son complément (NOT_OBJ, NOT_OBJ_BB), et
- si le complément a été décodé, la récupération de la forme en fonction dudit complément (NOT_OBJ, NOT_OBJ_BB).

10. Codeur (ENC) pour coder un signal vidéo numérique, ledit signal vidéo numérique comprenant certains jeux d'objets (OBJ) avec des formes associées, **caractérisé en ce qu'**il comprend une information (FLAG) pour déterminer si la forme d'un objet (OBJ), va être codée, ou celle de son complément, et des moyens de codage pour coder ladite forme ou son complément en fonction de ladite information (FLAG).

11. Décodeur (DEC) pour décoder un signal vidéo numérique, ledit signal vidéo numérique comprenant certains jeux d'objets (OBJ) avec des formes associées, **caractérisé en ce qu'**il comprend des moyens de décodage pour récupérer une information (FLAG), qui détermine si la forme d'un objet (OBJ) a été codée, ou celle de son complément, pour décoder ladite forme ou son complément en fonction de ladite information (FLAG), et pour récupérer la forme en fonction dudit complément si le complément (NOT_OBJ, NOT_OBJ_BB) a été décodé.

12. Système de communication vidéo (SYS), qui est à même de recevoir un signal vidéo numérique, comprenant un émetteur (REC) muni d'un codeur (ENC) suivant la revendication 10 pour coder ledit signal vidéo, un canal de transmission (CH) pour transmettre le signal vidéo codé et un récepteur (RECEIV) muni d'un décodeur (DEC) suivant la revendication 11 pour décoder ledit signal vidéo codé.
